# EUROPEAN PATENT APPLICATION

(11) **EP 2 730 664 A1**
(43) Date of publication of application: **14.05.2014**
(21) Application number: 13192545.5
(22) Date of filing: 12.11.2013
(51) Int. Cl.: C21B 5/00, F27D 21/00, C21B 7/24

(54) **Apparatus for detecting surface of substance loaded in a blast furnace**

(30) Priority: 12.11.2012 JP 2012248448; 05.03.2013 JP 2013043446; 07.06.2013 JP 2013121000
(71) Applicant: Wadeco Co., Ltd., Amagasaki-shi, Hyogo 660-0811 (JP)
(72) Inventor: Kayano, Hayae, Hyogo-ken, 660-0811 (JP)
(74) Representative: Ahner, Philippe

(57) **Abstract**

A metallic reflection plate is disposed so as to face oppositely an antenna connected to a transmitter-receiver. A detection wave from the antenna is reflected by the reflection plate so as to enter an interior of a blast furnace through an opening portion of the furnace and the detection wave reflected by a substance loaded in the furnace is reflected by the reflection plate and sent to the antenna. In a main pipe portion accommodating the antenna and the reflection plate, a gas-permeable bulkhead is provided so as to face oppositely a reflection surface of the reflection plate and a non-gas-permeable bulkhead is provided so as to face oppositely an antenna surface of the antenna. An inactive gas is supplied under high pressure into a space defined between the gas-permeable bulkhead and the non-gas-permeable bulkhead.

## Description

### BACKGROUND

### TECHNICAL FIELD

The present invention relates to a detection apparatus for detecting a surface of a substance loaded in a blast furnace, more specifically, detecting a distance to a surface or a surface profile of iron ore or coke loaded in a blast furnace by transmitting a detection wave such as microwave or millimeter wave into the blast furnace and detecting the detection wave reflected on the iron ore or coke loaded. More particularly, the present invention relates to an improved dust protecting construction for such a detection apparatus.

### RELATED ART

In a blast furnace, a detection apparatus detects a distance to or a surface profile of iron ore or coke loaded in the furnace. Specifically, an opening portion is provided near a highest part of the furnace, and an antenna is provided coaxially with the opening portion. A microwave (a transmitted wave) is transmitted from a microwave transmitter-receiver via the antenna and is caused to enter an interior of the furnace through the opening portion. The microwave is then reflected on the iron ore or coke in the furnace, and the microwave so reflected (the reflected wave) is collected by the antenna through the opening portion and is then sent to the microwave transmitter-receiver. The microwave transmitter-receiver detects the distance to or the surface profile of the iron core or coke from a phase difference between the transmitted wave and the reflected wave (for example, refer to Patent Literature 1).

In addition, a different detection apparatus is also used in a blast furnace for the same purpose. Specifically, a reflection plate is provided directly above an opening portion, and an antenna is provided so as to face oppositely the reflection plate. Then, a microwave (a transmitted wave) is transmitted from a microwave transmitter-receiver via the antenna, and the microwave is then reflected by the reflection plate so as to enter in an interior of the blast furnace through the opening portion. The microwave is then reflected by iron ore or coke loaded in the furnace, and the microwave so reflected (the reflected wave) is caused to enter the reflection plate through the opening portion so as to be reflected again on the reflection plate to the microwave transmitter-receiver (for example, refer to Patent Literature 2).

In these detection apparatuses, it is general practice to close the opening portion by a shield member which is made of a ceramic which transmits a microwave and which has resistance to heat and pressure in order to prevent the ingress of hard particles of processed iron ore, coke, dust and the like from the interior of the furnace into the detection apparatus through the opening portion. In Patent Literature 1, a gas-permeable heat resistant board is fitted in the opening portion.

### [Prior Art Literature]

### [Patent Literature]

[Patent Literature 1] JP-A-2006-38756
[Patent Literature 2] JP-A-2011-145237

However, a high pressure of 4kg/cm² is produced in the furnace, and particles of iron roe, coke and dust collide with the shield member frequently. As a result, the ceramic shield member is damaged relatively early, and in the worst case, there occurs a situation in which the shield member cracks. The whole of the detection apparatus needs to be removed from the opening portion for replacement of the shield member, taking some time to complete the replacement work.

In addition, the iron ore, coke and dust stick to a furnace side surface of the shield member, and those substances sticking to the shield member affect the transmission and reception of the microwave. However, in the case of the shield member being provided in the opening portion, the sticking state of those substances cannot be observed. In addition, when attempting to remove the substances sticking to the shield member, the whole of the detection apparatus needs to be removed from the opening portion, taking some time to complete the removing work.

### SUMMARY

An object of the invention is to provide a detection apparatus for detecting a surface of a substance loaded in a blast furnace which can prevent the damage or crack of a shield member which closes an opening portion in the furnace, which can eliminate a risk of the transmission and reception of a detection wave being affected by a substance sticking to the shield member, and further which can facilitate the removal of the sticking substance.
(1) A detection apparatus for detecting a surface of a substance loaded in a blast furnace, according to an exemplary embodiment of the invention, comprises:
   an antenna;
   a transmitter-receiver connected to the antenna, and configured to transmit a detection wave to the blast furnace through the antenna and to receive the detection wave reflected by the substance loaded in the blast furnace through the antenna;
   a metallic reflection plate provided above an opening portion of the blast furnace and disposed so as to face oppositely the antenna, the reflection plate being configured to reflect the detection wave from the antenna to the blast furnace and to reflect the detection wave reflected by the substance loaded in the blast furnace to the antenna;
   a pipe structure comprising a main pipe portion with an opening portion opened in a location lying below the reflection surface of the reflection plate, and a connection pipe portion configured to connect the opening portion of the main pipe portion with the opening portion of the blast furnace, wherein the antenna and the reflection plate are accommodated in the main pipe portion in such a way that an antenna surface of the antenna and a reflection surface of the reflection plate face oppositely each other;
   a gas-permeable bulkhead made of a material which transmits the detection wave, and provided in the main pipe portion so as to face oppositely the reflection surface of the reflection plate; and
   a non-gas-permeable bulkhead made of a material which transmits the detection wave, and provided in the main pipe portion so as to face oppositely the antenna surface of the antenna, wherein
   an inactive gas is supplied under high pressure into a space defined between the gas-permeable bulkhead and the non-gas-permeable bulkhead so that the inactive gas is jetted from a surface of the gas-permeable bulkhead towards the reflection plate.
(2) In the detection apparatus for detecting a surface of a substance loaded in a blast furnace according to (1), the reflection plate is provided so that the reflection surface rotates about an axis of the main pipe portion, and the connection pipe portion is formed so as to exhibit a fan shape which gradually expands or flares in diameter in a direction which is at right angles to the axis of the main pipe portion.
(3) In the detection apparatus for detecting a surface of a substance loaded in a blast furnace according to (1) or (2), the main pipe portion includes a window in an appropriate location lying on the periphery of the reflection plate, and the reflection surface is observed by rotating the reflection plate so as to direct the reflection surface towards the window.
(4) In the detection apparatus for detecting a surface of a substance loaded in a blast furnace according to any of (1) to (3), the non-gas-permeable bulkhead is inclined with respect to the antenna surface of the antenna.
(5) In the detection apparatus for detecting a surface of a substance loaded in a blast furnace according to any of (1) to (4), a plurality of fine holes are formed in the reflection surface of the reflection plate, so that an inactive gas supplied under high pressure into an interior of the reflection plate is jetted from the fine holes.
(6) The detection apparatus for detecting a surface of a substance loaded in a blast furnace according to any of (1) to (5), further comprises:
   a waveguide configured to connect the antenna with the transmitter-receiver; and
   a plug member made of a material which transmits the detection wave, and configured to close the waveguide.
(7) The detection apparatus for detecting a surface of a substance loaded in a blast furnace according to any of (1) to (6), further comprises:
   a pressure switch attached to a space which is defined by the non-gas-permeable bulkhead and which accommodates the antenna, wherein
   when an internal pressure in the space is increased as a result of the non-gas-permeable bulkhead cracking, the pressure switch is activated to close the opening portion of the blast furnace or the occurrence of an abnormal situation is informed of.
(8) The detection apparatus for detecting a surface of a substance loaded in a blast furnace according to any of (2) to (7), further comprises:
   a motor configured to rotate the reflection plate;
   a shaft configured to connect the motor with the reflection plate;
   a motor accommodation compartment attached to an exterior of the main pipe portion and configured to accommodate the motor, or a shaft accommodating compartment attached to an exterior of the main pipe portion and configured to accommodate the shaft; and
   a pressure switch attached to the motor accommodating compartment or the shaft accommodating compartment, wherein
   when an internal pressure in the motor accommodating compartment or the shaft accommodating compartment is increased, the pressure switch is activated to close the opening portion of the blast furnace or the occurrence of an abnormal situation is informed of.
(9) The detection apparatus for detecting a surface of a substance loaded in a blast furnace according to (8), further comprises:
   a gland packing configured to seal off a gap between the shaft and the main pipe portion.
(10) The detection apparatus for detecting a surface of a substance loaded in a blast furnace according to any of (1) to (9), further comprises:
   a flowmeter attached to an inactive gas supply, wherein
   when the amount of inactive gas supplied is reduced or the supply of inactive gas is stopped, the opening portion of the blast furnace is closed or the occurrence of an abnormal situation is informed of.
(11) The detection apparatus for detecting a surface of a substance loaded in a blast furnace according to any of (1) to (10), further comprises:
   a thermometer attached to an appropriate location of the detection apparatus,
      wherein
   when the temperature of the detection apparatus is increased above a prescribed value, the opening portion in the blast furnace is closed or the occurrence of an abnormal situation is informed of.
(12) In the detection apparatus for detecting a surface of a substance loaded in a blast furnace according to any of (1) to (11), the antenna is a horn antenna or a horn antenna with a lens.
(13) In the detection apparatus for detecting a surface of a substance loaded in a blast furnace according to any of (1) to (12), the pipe structure includes a connecting portion which lies on a side, which the gas-permeable bulkhead is placed, between the main pipe portion (30) and the connection pipe portion, the connecting portion being formed into an inclined surface which declines towards the blast furnace.

In the detection apparatus for detecting a surface of a substance loaded in a blast furnace of the invention, no shield member which closes the opening portion is provided and hence, the particles of iron ore, coke and dust from the interior of the furnace collide directly with the reflection plate. However, since the reflection plate is made of metal, there is caused no such situation that the reflection plate is damaged or cracked by the impact force. In addition, the gas-permeable bulkhead is provided so as to face oppositely the reflection plate. However, since the impact force of the particles of iron ore, coke and dust is reduced largely as a result of those substances colliding with the reflection plate, even through the particles of iron ore, coke and dust which are reflected by the reflection plate collide with the gas-permeable bulkhead, there is caused no such situation that the gas-permeable bulkhead is damaged or cracked. Moreover, since the inactive gas is jetted under high pressure from the gas-permeable bulkhead, the particles of iron ore, coke and dust which stick to not only the surface of the gas-permeable bulkhead but also the reflection surface of the reflection plate are removed, whereby the transmission and reception of the detection wave is maintained in a good condition. Further, by adopting the configuration in which the inactive gas is jetted under high pressure from the reflection surface of the reflection plate, the particles of iron ore, coke and dust from the furnace can be prevented from sticking to the reflection surface in a more ensured fashion.

In addition, by adopting the configuration in which the reflection surface is directed towards the window formed in the main pipe portion by rotating the reflection plate, the sticking state of the particles of iron ore, coke and dust to the reflection surface can be confirmed. When the sticking substances are removed, the window is opened to facilitate the removing work.

Further, by closing the waveguide which connects the antenna with the transmitter-receiver or closing the opening portion in the blast furnace when the pressure switch is activated, the leakage of poisonous gas from the furnace to the exterior of the transmitter-receiver can be prevented. In addition, the generation of poisonous gas can be informed of so that the countermeasures against the poisonous gas generation can be taken quickly. Further, by adopting the configuration in which the opening portion is closed or the occurrence of an abnormal situation is informed of by detecting the abnormal situation by the flowmeter for controlling the supply of inactive gas or the thermometer, the safety is enhanced.

### BRIEF DESCRIPTION OF THE DRAWINGS

Fig. 1 is a sectional view showing a main part of a detection apparatus for detecting a surface of a substance loaded in a blast furnace according to an exemplary embodiment of the invention.
Fig. 2 is a sectional view showing a connection pipe portion viewed from an opposite side to a reflection surface.
Fig. 3 is a sectional view showing one example of a sealing construction on a side of an antenna.
Fig. 4 is a sectional view showing a horn antenna with a lens.
Fig. 5 is a graph showing the directivity of a parabola antenna.
Fig. 6 is a graph showing the directivity of a horn antenna with a lens.
Fig. 7 is a sectional view showing one example of a sealing construction on a side of a motor.
Fig. 8 is a sectional view showing another example of a sealing construction on the side of a motor.
Fig. 9 is a sectional view showing a connecting portion between a main pipe portion and a connection pipe portion.

### DETAILED DESCRIPTION

Hereinafter, the invention will be described in detail by reference to the drawings.

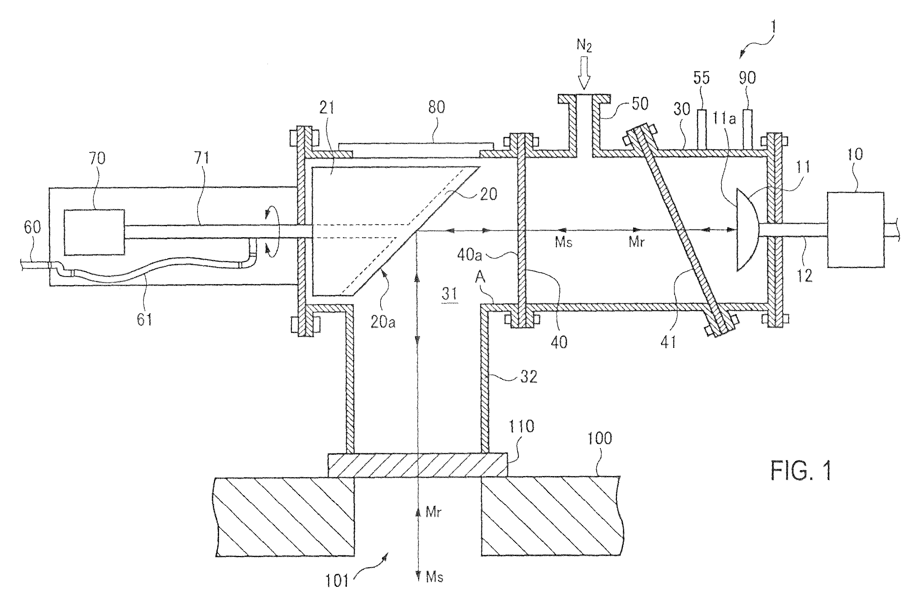

Fig. 1 is a sectional view showing a main part of an embodiment of a detection apparatus for detecting a surface of a substance (more specifically, detecting a distance to a surface or a surface profile of a substance) loaded in a blast furnace (hereinafter, referred to as a "detection apparatus") 1 according to the invention.

An opening portion 101 is opened near a highest part of a blast furnace 100, and a detection apparatus 1 is connected to the opening portion 101. In the detection apparatus 1, an antenna 11 and a metallic reflection plate 20 are accommodated in a main pipe portion 30 so as to face each other oppositely. The antenna 11 is connected to a transmitter-receiver 10 through a waveguide 12. The transmitter-receiver 10 transmits a microwave which is a detection wave through the antenna 11. The reflection plate 20 is disposed so that a center thereof is aligned with a transmission axis of a microwave from the antenna 11. In the main pipe portion 30, an opening 31 which is larger in diameter than a reflection surface 20a of the reflection plate 20 is formed directly below the reflection surface 20a, and a connection pipe portion 32 is formed so as to extend from this opening 31 to the opening portion 101 of the blast furnace 100. A pipe structure which is made up of the main pipe portion 30 and the connection pipe portion 32 is formed so as to exhibit a substantially L-shape as a whole.

In addition, a gas-permeable bulkhead 40 is provided in an interior of the main pipe portion 30 so as to face oppositely the reflection surface 20a of the reflection plate 20. Further, a non-gas-permeable bulkhead 41 is provided so as to face oppositely an antenna surface 11a of the antenna 11. In addition, an inactive gas such as a nitrogen gas or the like is supplied under high pressure from a gas supply port 50 into a space defined by both the bulkheads 40, 41.

The non-gas-permeable bulkhead 41 is formed of a material which transmits a microwave, which is heat resistant and which has a mechanical strength which can withstand the inactive gas supplied under high pressure. This bulkhead 41 can be made up, for example, of a ceramic plate. The thickness of the ceramic plate is controlled so as not only to provide a predetermined strength but also to eliminate any problem with transmission of a microwave. Additionally, the ceramic plate may have a slight level of gas permeability. However, depending upon types of ceramics, there are ceramics which slightly reflect a microwave, and as this occurs in reality, the reflected microwave may generate noise. Therefore, as shown in the figure, it is preferable that the non-gas-permeable bulkhead 41 is inclined with respect to the antenna surface 11a of the antenna 11.

The gas-permeable bulkhead 40 is formed of a porous ceramic. In addition to this, a gas-permeable fabric which is formed of a ceramic fiber or glass fiber can be used for the gas-permeable bulkhead 40.

In addition, a gate valve 110 is interposed at a connecting portion between the connection pipe portion 32 and the opening portion 101 in the blast furnace 100 and, and the gate valve 110 is opened when a measurement is carried out, while the gate valve 110 is closed when no measurement is carried out.

In the detection apparatus 1, when a measurement is carried out, as shown in the figure, a transmitted microwave Ms which is transmitted from the transmitter-receiver 10 through the antenna 11 passes through the non-gas-permeable bulkhead 41 and the gas-permeable bulkhead 40, is reflected on the reflection surface 20a of the reflection plate 20 and passes through the connection pipe portion 32 to enter an interior of the furnace from the opening portion 101 of the blast furnace 100. Then, the transmitted microwave Ms is reflected on a surface of iron ore or coke (not shown) loaded in the furnace, and the reflected microwave Mr travels to the reflection plate 20 through the opening portion 101 and is then reflected on the reflection surface 20a. Thereafter, the reflected microwave Mr passes through the gas-permeable bulkhead 40 and the non-gas-permeable bulkhead 41 and is then received by the antenna 11 to be detected by the transmitter-receiver 10. Then, in the transmitter-receiver 10, the received signal is sent to an arithmetic operation device (not shown), and a distance to a surface of the iron ore or coke in the furnace is obtained based on the results of the transmission and reception of the microwave in the arithmetic operation device.

In addition, when a measurement is carried out, the inactive gas is supplied under high pressure from the gas supply port 50 into the space defined between the two bulkheads 40, 41. Although particles of iron ore, coke and dust enter an interior of the main pipe portion 30 through the opening portion 101 from the blast furnace 100 during measurement, the particles of iron ore, coke and dust collide with the reflection surface 20a of the reflection plate 20, whereby the impact force of the particles is reduced largely. Then, part of the particles of iron ore, coke and dust which are reflected by the reflection surface 20a falls into the opening portion 101, while the remainder reaches the gas-permeable bulkhead 40. However, since the impact force of the particles of iron ore, coke and dust that reach the gas-permeable bulkhead 40 is not large due to the impact force being reduced largely when the particles of iron ore, coke and duct have collided with the reflection surface 20a, there is no danger that the gas-permeable bulkhead 40 is damaged or cracked or fails.

On the other hand, since the reflection plate 20 is made of metal, even though the particles of iron ore, coke and dust collide therewith, there is caused no such situation that the transmission and reception of the microwave is badly affected.

In addition, the inactive gas is jetted under high pressure from a reflection plate side surface 40a of the gas-permeable bulkhead 40, and this prevents the particles of iron ore, coke and dust from sticking to the surface 40a, whereby the transmission and reception of the microwave is maintained in a good condition.

Further, it is expected that the inactive gas jetted from the gas-permeable bulkhead 40 reaches the reflection surface 20a of the reflection plate 20 to remove the substances sticking thereto. Since the inactive gas flows obliquely downwards along the reflection surface 20a, the efficiency with which the sticking substances are removed is enhanced.

In order to prevent the damage, crack or failure of the gas-permeable bulkhead 40 by the particles of iron ore, coke and dust in a more ensured fashion, it is preferable to keep the gas-permeable bulkhead 40 far away from the reflection plate 20. However, in this case, the advantage of the substances sticking to the reflection surface 20a being removed therefrom by the inactive gas jetted from the gas-permeable bulkhead 40 is reduced, and further, the main pipe portion 30 has to be lengthened accordingly, and this increases the space of where to install the whole detection apparatus. Because of this, a distance between the gas-permeable bulkhead 40 and the reflection plate 20 is set as required in consideration of the impact force of the particles of iron ore, coke and dust, the advantage of the substances sticking to the reflection surface 20a being removed therefrom by the inactive gas, and the length of the main pipe portion 30.

Additionally, in order to prevent the particles of iron ore, coke and dust from sticking to the reflection surface 20a in a more ensured fashion, it is possible to jet the inactive gas from the reflection plate 20, too. To make this happen, the reflection plate 20 is housed in a housing 21, and a number of fine holes are formed in the reflection surface 20a in such a diameter and intervals that do not affect the reflection of the microwave thereon. In addition, a hollow construction is adopted for a shaft 71 of a motor 70, and a number of holes are formed in a portion of the shaft 71 which is inserted into an interior of the housing 21. The inactive gas is then caused to flow to an appropriate location in an interior of the shaft 71 through a gas supply port 60. The shaft 71 and the gas supply port 60 are connected to each other by a flexible hose 61 so as to deal with the rotation of the shaft 71. By doing so, the inactive gas is supplied under high pressure in to the interior of the housing 21, whereby the inactive gas is jetted from the fine holes in the reflection surface 20a.

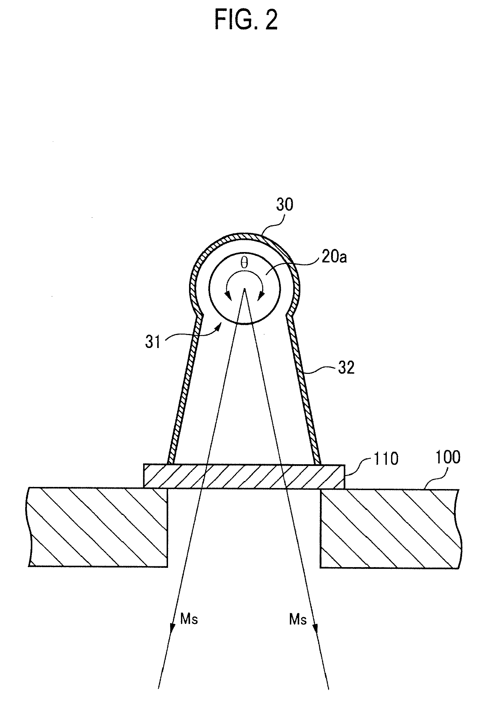

In addition, the transmitted microwave Ms can be sent in a rotational direction of the reflection surface 20a as shown in Fig. 2 by rotating the reflection surface 20a of the reflection plate 20 in a direction which is normal to an axis thereof by the motor 70, thereby making it possible to detect a surface profile of the iron ore or coke in the furnace by scanning the surface of the iron ore or coke in a linear fashion. As this occurs, as shown in Fig. 2, the connection pipe portion 32 is formed into a fan shape which gradually expands or flares in diameter towards the blast furnace in accordance with a rotational angle θ (a swing width) of the reflection surface 20a.

Further, a window 80 is formed in the main pipe portion 30 in an appropriate location on the periphery of the reflection plate 20, for example, a location situated directly above the reflection surface 20a, whereby the reflection surface 20a can be observed by rotating the reflection plate 20 through 180° so as to face the window 80. Particles of iron ore, coke and dust from the furnace collide and stick to the reflection surface 20a from time to time, and the sticking condition of those particles to the reflection surface 20a can be known through the window 80. Then, when the those particles needs to be removed, the window 80 can be opened for execution of removing work.

Thus, while the embodiment of the invention has been described heretofore, the invention can be modified variously.

For example, in the case of the non-gas-permeable bulkhead 41 being made of ceramic, depending upon types of ceramics, the strength and thickness of the non-gas-permeable bulkhead 41 become insufficient and thin, leading to fears that the non-gas-permeable bulkhead 41 is cracked when vibration is transmitted thereto. In case the bulkhead 41 cracks, there are fears that a poisonous gas which is generated in the interior of the blast furnace 100 passes through the gas-permeable bulkhead 40 to enter the waveguide 12 and leaks from the transmitter-receiver 10.

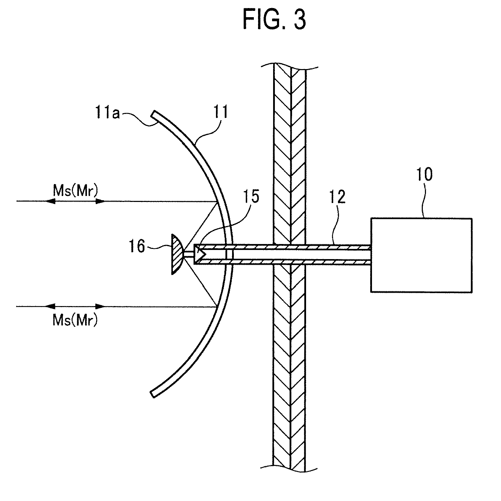

Then, a plug member which is made of a material such as a fluorine plastic which transmits a microwave is inserted into an interior of the waveguide 12 (not shown), or as shown in Fig. 3, a conical plug member 15 is installed at a distal end of the waveguide 12.

In this invention, a millimeter wave can also be used as a detection wave in addition to the microwave. A waveguide for millimeter wave is thin, and it is difficult to insert a plug member in an interior of the waveguide. However, as shown in Fig. 3, a configuration is effective in which the plug member 15 is installed at the distal end of the waveguide 12. It is noted that in the case of the millimeter wave being used, the bulkheads 40, 41 and the plug member 15 are formed of a material which transmits the millimeter wave.

It is noted that as shown in Fig. 3, a Cassegrain antenna can be used for the antenna 11. In the Cassegrain antenna, a microwave or millimeter wave is reflected by a reflection member 16 and is then sent to the antenna surface 11a. The microwave or millimeter wave is then reflected again on the antenna surface 11a for transmission. In addition, when receiving the microwave or millimeter wave, the microwave or millimeter wave enters the antenna surface 11 a to be sent to the reflection member 16 and is then received by the transmitter-receiver 10 through the waveguide 12. The plug member 15 is installed in the waveguide 12 at the distal end thereof.

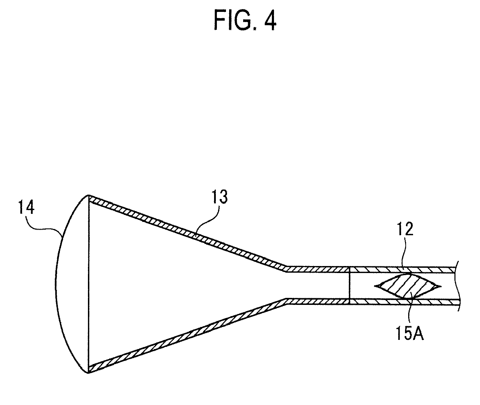

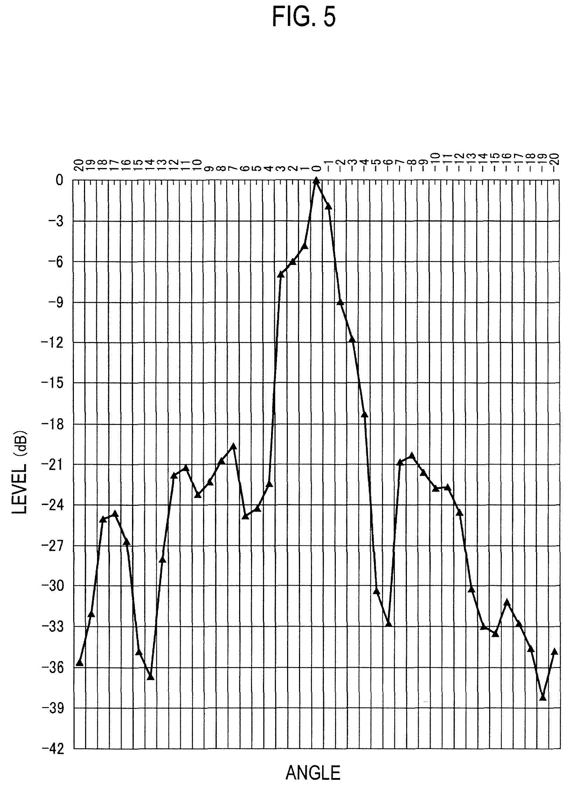

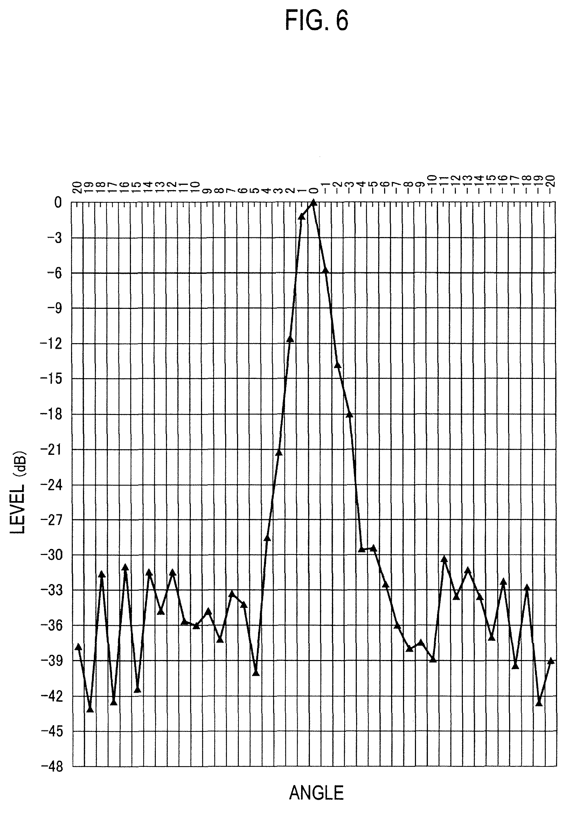

Additionally, although a parabola antenna or a horn antenna can also be used as the antenna 11, the horn antenna is preferable due to its simple construction. In particular, a horn antenna with a lens is preferable since the directivity is enhanced. As a horn antenna with a lens, there is a horn antenna 13 with a dielectric lens 14 which is additionally provided in an opening portion of the horn antenna 13 as shown in Fig. 4. Fig. 5 is a graph showing the directivity of a parabola antenna, and Fig. 6 is a graph showing the directivity of a horn antenna with a lens. The horn antenna with a lens has a superior directivity, and hence with this antenna, a directivity can be obtained in which a beam scatters less.

In the horn antenna with the dielectric lens, the horn antenna 13 and the dielectric lens 14 may be coupled together without any gap defined therebetween. As this occurs, the risk of a poisonous gas entering the waveguide 12 is eliminated, and this obviates the necessity of the plug member 15. In addition, although a gap may be defined between the horn antenna 13 and the dielectric lens 14, as this occurs, the plug member 15A is installed in the interior or at the distal end portion of the waveguide 12 in order to prevent the ingress of the poisonous gas into the waveguide 12.

In addition, in order to detect and inform of a crack in the bulkhead 41, as shown in Fig. 1, a pressure switch 55 is additionally provided in an appropriate location between the bulkhead 41 and the antenna 11. An output of the pressure switch 55 is designed to be sent to a gate valve opening and closing device (not shown) which controls the opening and closing of the gate valve 110 and to a gas supply device (not shown) which supplies the inactive gas to the gas supply ports 50, 60. When the bulkhead 41 cracks, increasing an internal pressure in the space between the bulkhead 40 and the antenna 11, the pressure switch 55 is activated, and the output therefrom is sent to the gate valve opening and closing device to close the gate valve 110 so as to prevent the ingress of the poisonous gas from the blast furnace 100 into the pipe structure.

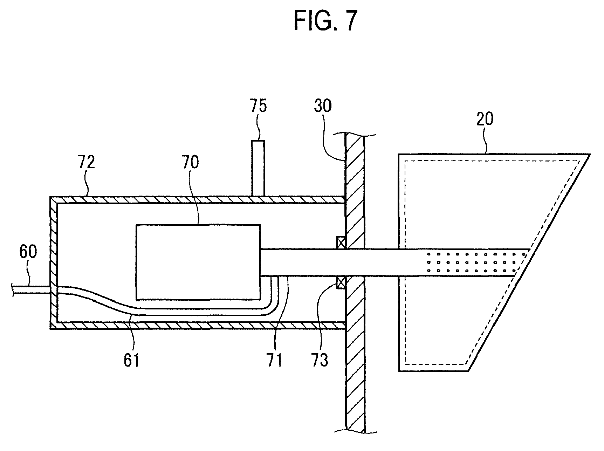

The sealing construction on the side of the antenna has been described. It is preferable to prevent the leakage of the poisonous gas on the side of the motor, as well. For example, as shown in Fig. 7, the motor 70 is accommodated in a motor accommodating compartment 72, which is disposed out of the main pipe portion 30. Then, a gap between the main pipe portion 30 and the shaft 71 is sealed off by a gland packing 73. Although an illustration thereof is omitted, the gland packing 73 is accommodated in a stuffing box and is then fastened by a packing fastener, whereby the sealing performance is increased. In addition, a pressure switch 75 is additionally attached to the motor accommodating compartment 72.

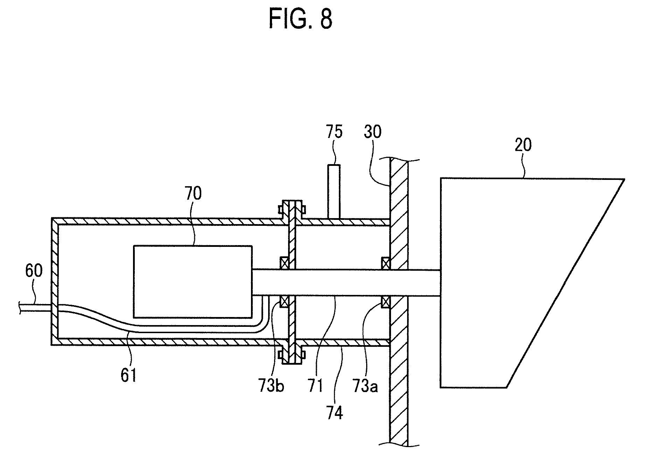

Alternatively, a configuration as shown in Fig. 8 may be adopted. In this configuration, part of a reflection plate side of the shaft 71 is accommodated in a shaft accommodating compartment 74, the motor 70 is disposed at the rear of the shaft accommodating compartment 74, and the shaft 71 is sealed double in an interior and at an exterior of the shaft accommodating compartment 74 with gland packings 73a, 73b. Additionally, a pressure switch 75 is additionally attached to the shaft accommodating compartment 74. Further, a motor accommodating compartment 72 like the one shown in Fig. 7 may additionally be provided so as to accommodate the motor 70 therein.

As with the pressure switch 55, an output of the pressure switch 75 is also designed to be sent to the gate vale opening and closing device and the gas supply device. The pressure switch 75 is activated when an internal pressure in the motor accommodating compartment 72 or the shaft accommodating compartment 74 is increased as a result of the poisonous gas enters the motor accommodating compartment 72 or the shaft accommodating compartment 74, and the output thereof is sent to the gate valve opening and closing device to close the gate valve 110 so as to prevent a further ingress of poisonous gas from the blast furnace 100 into the main pipe portion 30.

It is possible to shut off the leakage of poisonous gas from the blast furnace 100 by using these antenna side and motor side seal constructions described above. In addition, it is also possible to inform of the occurrence of an abnormal situation like this.

In addition, although not shown, a configuration may be adopted in which a flowmeter is additionally attached to a gas supply source which connects to the gas supply ports 50, 60, so that when the supply of inactive gas is stopped or the amount of inactive gas supplied is reduced, the gate valve 110 is closed or the occurrence of an abnormal situation is informed of. In case no inactive gas is supplied into the detection apparatus, the inactive gas is not jetted from the surface 40a of the gas-permeable bulkhead 40 and the reflection surface 20a of the reflection plate 20, leading to fears that the transmission and reception of the microwave cannot be executed properly.

Further, a configuration may be adopted in which a thermometer is additionally attached to an appropriate location of the main pipe portion 30, so that when the temperature in the interior of the main pipe portion 30 increases above a prescribed value, the gate valve 110 is closed or the occurrence of an abnormal situation is informed of. For example, as shown in Fig. 1, when a thermometer 90 is additionally provided between the bulkhead 41 and the antenna 11 in the main pipe portion 30 so as to be adjacent to the pressure switch 55, in the event that the bulkhead 41 cracks, an internal pressure in the space between the bulkhead 41 and the antenna 11 is reduced. Then, the internal temperature in the space between the bulkhead 41 and the antenna 11 is increased due to the heated air from the furnace 100 and this increase in temperature is detected by the thermometer 90. Then, by being let known of the increase in temperature by the thermometer 90, the gate valve 110 is closed or the occurrence of an abnormal situation is informed of, thereby making it possible to prevent in a more ensured fashion the leakage of poisonous gas into and thereafter out of the transmitter-receiver 10 through the wave guide 12 which would otherwise occur as a result of cracking of the bulkhead 41.

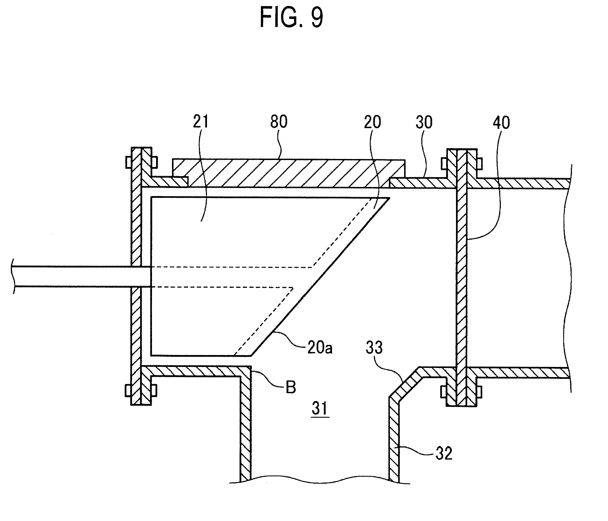

In addition to what has been described above, as shown in Fig. 9, a side of a connecting portion between the main pipe portion 30 and the connection pipe 32 which faces the bulkhead 40 can also be formed into an inclined surface 33 which declines towards the blast furnace. When the connection pipe portion 32 connects to the main pipe portion 30 at right angles as shown in Fig. 1, particles of iron ore, coke and dust that collide with the reflection surface 20a of the reflection plate 20 or the bulkhead 40 fall on a connecting portion A between the main pipe portion 30 and the connection pipe portion 32 to be accumulated there, and the substances so accumulated then affect badly the transmission and reception of the microwave. Then, by forming the connecting portion A into the inclined surface 33 which declines towards the blast furnace, the particles of iron ore, coke and dust slide down along the inclined surface 33, whereby the accumulation of iron ore, coke and dust particles can be prevented.

Since the opening portion 31 is formed directly below a connecting portion B which is situated on an opposite side to the inclined surface 33, the particles of iron ore, coke and dust which collide with the reflection surface 20a of the reflection plate 20 fall into the opening portion 31, and therefore, there is no risk of iron ore, coke and dust particles being accumulated on the connecting portion B.

Thus, while the detection apparatus of the invention has been described heretofore, in addition to the application to the blast furnace, the detection apparatus of the invention can also be used to detect a surface profile and the like of a substance loaded in a converter or a coal hopper.

## Claims

1. A detection apparatus (1) for detecting a surface of a substance loaded in a blast furnace (100), comprising:
an antenna (11);
a transmitter-receiver (10) connected to the antenna (11), and configured to transmit a detection wave to the blast furnace (100) through the antenna (11) and to receive the detection wave reflected by the substance loaded in the blast furnace (100) through the antenna (11);
a metallic reflection plate (20) provided above an opening portion (101) of the blast furnace (100) and disposed so as to face oppositely the antenna (11), the reflection plate (20) being configured to reflect the detection wave from the antenna (11) to the blast furnace (100) and to reflect the detection wave reflected by the substance loaded in the blast furnace (100) to the antenna (11);
a pipe structure (30, 32) comprising a main pipe portion (30) with an opening portion (31) opened in a location lying below the reflection surface (20a) of the reflection plate (20), and a connection pipe portion (32) configured to connect the opening portion (31) of the main pipe portion (30) with the opening portion (101) of the blast furnace (100), wherein the antenna (11) and the reflection plate (20) are accommodated in the main pipe portion (30) in such a way that an antenna surface (11a) ofthe antenna (11) and a reflection surface (20a) of the reflection plate (20) face oppositely each other;
a gas-permeable bulkhead (40) made of a material which transmits the detection wave, and provided in the main pipe portion (30) so as to face oppositely the reflection surface (20a) of the reflection plate (20); and
a non-gas-permeable bulkhead (41) made of a material which transmits the detection wave, and provided in the main pipe portion (30) so as to face oppositely the antenna surface (11a) ofthe antenna (11), wherein
an inactive gas is supplied under high pressure into a space defined between the gas-permeable bulkhead (40) and the non-gas-permeable bulkhead (41) so that the inactive gas is jetted from a surface (40a) of the gas-permeable bulkhead (40) towards the reflection plate (20).

2. The detection apparatus for detecting a surface of a substance loaded in a blast furnace according to Claim 1, wherein
the reflection plate (20) is provided so that the reflection surface (20a) rotates about an axis of the main pipe portion (30), and
the connection pipe portion (32) is formed so as to exhibit a fan shape which gradually expands or flares in diameter in a direction which is at right angles to the axis of the main pipe portion (30).

3. The detection apparatus for detecting a surface of a substance loaded in a blast furnace according to Claim 1 or 2, wherein
the main pipe portion (30) includes a window (80) in an appropriate location lying on the periphery of the reflection plate (20), and
the reflection surface (20a) is observed by rotating the reflection plate (20) so as to direct the reflection surface (20) towards the window (80).

4. The detection apparatus for detecting a surface of a substance loaded in a blast furnace according to any of Claims 1 to 3, wherein
the non-gas-permeable bulkhead (41) is inclined with respect to the antenna surface (11a) ofthe antenna (11).

5. The detection apparatus for detecting a surface of a substance loaded in a blast furnace according to any of Claims 1 to 4, wherein
a plurality of fine holes are formed in the reflection surface (20a) of the reflection plate (20), so that an inactive gas supplied under high pressure into an interior of the reflection plate (20) is jetted from the fine holes.

6. The detection apparatus for detecting a surface of a substance loaded in a blast furnace according to any of Claims 1 to 5, further comprising:
a waveguide (12) configured to connect the antenna (11) with the transmitter-receiver (10); and
a plug member (15) made of a material which transmits the detection wave, and configured to close the waveguide (12).

7. The detection apparatus for detecting a surface of a substance loaded in a blast furnace according to any of Claims 1 to 6, further comprising:
a pressure switch (55) attached to a space which is defined by the non-gas-permeable bulkhead (41) and which accommodates the antenna (11), wherein
when an internal pressure in the space is increased as a result of the non-gas-permeable bulkhead (41) cracking, the pressure switch (55) is activated to close the opening portion (101) of the blast furnace (100) or the occurrence of an abnormal situation is informed of.

8. The detection apparatus for detecting a surface of a substance loaded in a blast furnace according to any of Claims 2 to 7, further comprising:
a motor (70) configured to rotate the reflection plate (20);
a shaft (71) configured to connect the motor (70) with the reflection plate (20);
a motor accommodation compartment (72) attached to an exterior of the main pipe portion (30) and configured to accommodate the motor (70), or a shaft accommodating compartment (74) attached to an exterior of the main pipe portion (30) and configured to accommodate the shaft (71); and
a pressure switch (75) attached to the motor accommodating compartment (72) or the shaft accommodating compartment (74), wherein
when an internal pressure in the motor accommodating compartment (72) or the shaft accommodating compartment (74) is increased, the pressure switch (75) is activated to close the opening portion (101) of the blast furnace (100) or the occurrence of an abnormal situation is informed of.

9. The detection apparatus for detecting a surface of a substance loaded in a blast furnace according to Claim 8, further comprising:
a gland packing (73) configured to seal off a gap between the shaft (71) and the main pipe portion (30).

10. The detection apparatus for detecting a surface of a substance loaded in a blast furnace according to any of Claims 1 to 9, further comprising:
a flowmeter attached to an inactive gas supply, wherein
when the amount of inactive gas supplied is reduced or the supply of inactive gas is stopped, the opening portion (101) of the blast furnace (100) is closed or the occurrence of an abnormal situation is informed of.

11. The detection apparatus for detecting a surface of a substance loaded in a blast furnace according to any of Claims 1 to 10, further comprising:
a thermometer (90) attached to an appropriate location of the detection apparatus (1), wherein
when the temperature of the detection apparatus (1) is increased above a prescribed value, the opening portion (101) in the blast furnace (100) is closed or the occurrence of an abnormal situation is informed of.

12. The detection apparatus for detecting a surface of a substance loaded in a blast furnace according to any of Claims 1 to 11, wherein
the antenna (11) is a horn antenna or a horn antenna with a lens.

13. The detection apparatus for detecting a surface of a substance loaded in a blast furnace according to any of Claims 1 to 12, wherein
the pipe structure (30, 32) includes a connecting portion (33) which lies on a side, which the gas-permeable bulkhead (41) is placed, between the main pipe portion (30) and the connection pipe portion (32), the connecting portion (33) being formed into an inclined surface which declines towards the blast furnace (100).
